# EUROPÄISCHE PATENTANMELDUNG

(11) **EP 2 915 638 A1**
(43) Veröffentlichungstag der Anmeldung: **09.09.2015**
(21) Anmeldenummer: 15157232.8
(22) Anmeldetag: 02.03.2015
(51) Int. Cl.: B26D 7/00, B26D 7/18, B29C 45/00, F16B 21/04

(54) **Verbindungselement für wenigstens zwei plattenförmige Elemente eines Werkzeugs, Verwendung eines Verbindungselements sowie Stanz- oder Ausbrechwerkzeug**

(30) Priorität: 04.03.2014 DE 102014102832
(71) Anmelder: CPS-Bender GbR, 68789 St. Leon-Rot (DE)
(72) Erfinder: Bender, Andreas Kurt, 68789 St. Leon-Rot (DE)
(74) Vertreter: Vötsch, Reiner

(57) **Zusammenfassung**

Die Erfindung betrifft ein Verbindungselement (10) für wenigstens zwei plattenförmige Elemente (101, 102) eines Werkzeugs (100), insbesondere eines Stanz- oder Ausbrechwerkzeugs, mit einem ersten Abschnitt (12), der dazu ausgebildet ist, mit einem ersten plattenförmigen Element (102) des Werkzeugs (100) verbunden zu werden und einem zweiten Abschnitt (13), der dazu ausgebildet ist, mit einem zweiten plattenförmigen Element (101) des Werkzeugs (100) verbunden zu werden, wobei der erste Abschnitt (12) zur linearen Führung des ersten plattenförmigen Elements (102) entlang einer Längsachse (17) des Verbindungselements (10) ausgebildet ist, und wobei die beiden Abschnitte (12, 13) jeweils einen Axialanschlag (14, 22) zur Begrenzung eines maximalen Bewegungshubs der wenigstens zwei plattenförmigen Elemente (101, 102) aufweisen. Erfindungsgemäß ist es vorgesehen, dass das Verbindungselement (10) einstückig ausgebildet ist, und dass der Axialanschlag (22) des zweiten Abschnitts (13) dazu ausgebildet ist, einen Durchbruch (27) des zweiten plattenförmigen Elements (101) des Werkzeugs (100) unter Ausbildung einer Formschlußverbindung zu hintergreifen.

## Beschreibung

### Stand der Technik

Die Erfindung betrifft ein Verbindungselement für wenigstens zwei plattenförmige Elemente eines Werkzeugs, insbesondere eines Stanz- oder Ausbrechwerkzeugs, nach dem Oberbegriff des Anspruchs 1. Ferner betrifft die Erfindung die Verwendung eines erfindungsgemäßen Verbindungselements sowie ein Stanz- oder Ausbrechwerkzeug mit wenigstens einem erfindungsgemäßen Verbindungselement.

Ein Verbindungselement nach dem Oberbegriff des Anspruchs 1 ist aus der Praxis bereits bekannt. Das bekannte Verbindungselement dient in der Karton- und Wellpappenindustrie als Transportsicherung sowie als Hilfsmittel zum Ausrichten wenigstens zweier plattenförmiger Elemente beim Einrichten in einer Stanzanlage. Hierbei werden die beiden plattenförmigen Elemente, bei denen in einem der plattenförmigen Elemente üblicherweise Stanz- oder Ausbrechelemente angeordnet sind, während in dem anderen plattenförmigen Element mit diesen zusammenwirkende Ausbrüche in Form von Durchbrüchen vorgesehen sind, durch das Verbindungselement zueinander positioniert bzw. ausgerichtet. Wesentlich dabei ist, dass das aus der Praxis bekannte Verbindungselement aus zwei Teilelementen besteht: Das erste Teilelement weist einen plattenförmigen Sockelbereich auf, der mittels Befestigungsschrauben an der Oberseite des ersten plattenförmigen Elements befestigt ist. Darüber hinaus ist auf der dem plattenförmigen Element abgewandten Seite in dem ersten Teilelement eine Gewindebohrung vorgesehen, die mit einem Gewindeabschnitt des zweiten Teilelements zusammenwirkt. Das zweite Teilelement ist im Wesentlichen stiftförmig ausgebildet und weist auf der dem Gewindeabschnitt abgewandten Seite einen ringförmigen (ersten) Axialanschlag auf. Das zweite Teilelement durchdringt mit einem im Durchmesser kreisförmigen Abschnitt einen Durchbruch in dem zweiten plattenförmigen Element, wobei der (erste) Axialanschlag auf der dem ersten Teilelement abgewandten Seite des zweiten plattenförmigen Elements angeordnet wird. Weiterhin weist das zweite Teilelement im Bereich des Axialanschlags eine Werkzeugaufnahme, beispielsweise in Form eines Innensechskants auf, mit deren Hilfe das zweite Teilelement bzw. dessen Gewindeabschnitt mit dem ersten Teilelement verbunden werden kann. Der Sockelbereich des ersten Teilelements bildet durch eine Verbindung mit dem ersten plattenförmigen Element einen zweiten Axialanschlag aus. Durch die Verwendung zweier Teilelemente ist das aus der Praxis bekannte Verbindungselement relativ aufwändig gestaltet bzw. ausgebildet.

### Offenbarung der Erfindung

Ausgehend von dem dargestellten Stand der Technik liegt der Erfindung die Aufgabe zugrunde, ein Verbindungselement für wenigstens zwei plattenförmige Elemente eines Werkzeugs nach dem Oberbegriff des Anspruchs 1 derart weiterzubilden, dass eine gegenüber dem Stand der Technik vereinfachte Ausbildung des Verbindungselements erzielt wird. Diese Aufgabe wird erfindungsgemäß bei einem Verbindungselement mit den Merkmalen des Anspruchs 1 dadurch gelöst, dass das Verbindungselement einstückig ausgebildet ist, und dass der Axialanschlag des zweiten Abschnitts dazu ausgebildet ist, einen Durchbruch des zweiten plattenförmigen Elements des Werkzeugs unter Ausbildung einer Formschlussverbindung zu hintergreifen. Mit anderen Worten gesagt bedeutet dies, dass es durch eine spezielle Ausgestaltung des (zweiten) Axialanschlags ermöglicht wird, das Verbindungselement im Gegensatz zum Stand der Technik aus einem einzigen Teil herzustellen. Dadurch wird eine kostengünstige Fertigung bei hinreichend sicherer bzw. zuverlässiger Funktion des Verbindungselements ermöglicht.

Vorteilhafte Weiterbildungen des erfindungsgemäßen Verbindungselements für wenigstens zwei plattenförmige Elemente eines Werkzeugs sind in den Unteransprüchen aufgeführt. In den Rahmen der Erfindung fallen sämtliche Kombinationen aus zumindest zwei von in den Ansprüchen, der Beschreibung und/oder den Figuren offenbarten Merkmalen.

In konstruktiv bevorzugter Ausgestaltung des zweiten Axialanschlags ist es vorgesehen, dass dieser wenigstens einen Halteabschnitt, vorzugsweise in Form eines Haltearms, aufweist, der sich senkrecht zur Längsachse des Verbindungselements erstreckt.

Ganz besonders bevorzugt ist es, wenn genau zwei, um 180° zueinander versetzt angeordnete Halteabschnitte vorgesehen sind. Diese Ausführungsform ist deshalb von besonderem Vorteil, da ansonsten, bei Verwendung von mehr als zwei Halteabschnitten, ein Drehen des Verbindungselements um dessen Längsachse bereits um einen relativ kleinen Winkelbetrag (360°/Anzahl der Haltearme) ein Lösen der Formschlussverbindung zwischen dem plattenförmigen Element und dem Verbindungselement bewirken würde. Auf der anderen Seite ermöglicht es die Verwendung genau zweier Haltearme, die benötigten Halte- bzw. Gewichtskräfte der plattenförmigen Elemente auf mehrere Haltearme aufzuteilen, was hinsichtlich der benötigten Materialstärken bzw. der Festigkeit des Verbindungselements von Vorteil ist. Insbesondere genügt dann bereits eine relativ geringe Anzahl von Verbindungselementen zur Aufnahme der entstehenden Kräfte der plattenförmigen Elemente, beispielsweise zwischen 2 und maximal 6 Verbindungselemente.

Weiterhin ist es von Vorteil, wenn die beiden Abschnitte des Verbindungselements jeweils einen runden Querschnitt mit jeweils unterschiedlichem Durchmesser aufweisen, wobei der zweite Abschnitt den geringeren Durchmesser aufweist, und wobei die beiden Axialanschläge jeweils an einander abgewandten Endbereichen der beiden Abschnitte angeordnet sind. Die Verwendung eines runden Querschnitts, insbesondere im Bereich des ersten Abschnitts, ermöglicht es, eine Längsbewegung der beiden plattenförmigen Elemente mit relativ geringem radialem Bewegungsspiel zu realisieren.

Zur axialen Fixierung bzw. Festlegung des mit dem Verbindungselement zusammenwirkenden plattenförmigen Elements ist es darüber hinaus in Weiterbildung des zuletzt gemachten Vorschlags vorgesehen, dass der Übergang zwischen den beiden Abschnitten bzw. Durchmesserbereichen in Form einer Stufe ausgebildet ist, und dass die axiale Länge des zweiten Abschnitts zwischen der Stufe und dem dem zweiten Abschnitt zugeordneten Axialanschlag der Dicke des zweiten plattenförmigen Elements angepasst ist. Dadurch wird bewirkt, dass das zweite plattenförmige Element in axialer Richtung zum Verbindungselement zwischen der Stufe und dem zweiten Axialanschlag positioniert bzw. fixiert ist.

In weiterer konstruktiver Ausgestaltung der Erfindung ist es vorgesehen, dass der dem ersten Abschnitt zugeordnete Axialanschlag scheiben- bzw. ringförmig ausgebildet ist. Eine derartige scheiben- bzw. ringförmige Ausbildung des Axialanschlags bewirkt eine gleichmäßige Krafteinleitung vom ersten plattenförmigen Elements in das Verbindungselement und umgekehrt.

Ein Verriegeln bzw. Verbinden des Verbindungselements mit dem zweiten plattenförmigen Element erfolgt bevorzugt dadurch, dass auf der dem ersten Abschnitt abgewandten Seite des ersten Axialanschlags ein Betätigungselement, vorzugsweise in Form einer Werkzeugaufnahme für einen Gabelschlüssel, ausgebildet ist, die zum Drehen des Verbindungselements um die Längsachse dient.

Um einerseits eine möglichst einfache bzw. preiswerte Herstellung des Verbindungselements zu ermöglichen, und andererseits genügend Festigkeitsreserven des Verbindungselements zu ermöglichen, ist es in bevorzugter Weiterbildung des Verbindungselements vorgesehen, dass dieses als Spritzgussteil ausgebildet ist und aus faserverstärktem Kunststoff besteht.

Die Erfindung umfasst auch die Verwendung eines erfindungsgemäßen Verbindungselements als Transport- und Positionierelement wenigstens zweier plattenförmiger Elemente eines Stanz- oder Ausbrechwerkzeugs.

Zuletzt umfasst die Erfindung auch ein Stanz- oder Ausbrechwerkzeug oder dergleichen, umfassend wenigstens zwei plattenförmige Elemente, die unter Verwendung wenigstens eines, vorzugsweise mehrerer erfindungsgemäßer Verbindungselemente miteinander verbunden sind, wobei in einem ersten plattenförmigen Element ein erster Durchbruch für den ersten Abschnitt des Verbindungselements ausgebildet ist. Erfindungsgemäß ist es vorgesehen, dass in dem zweiten plattenförmigen Element ein zweiter Durchbruch für den zweiten Abschnitt des Verbindungselements ausgebildet ist, und dass der zweite Durchbruch zusätzlich wenigstens eine Aussparung in Form eines Durchbruchs aufweist, der der Form des Axialanschlags des zweiten Abschnitts des Verbindungselements angepasst ist.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: eine Seitenansicht in teilweise geschnittener Darstellung eines Stanz- oder Ausbrechwerkzeugs unter Verwendung mehrerer erfindungsgemäßer Verbindungselemente,
- Fig. 2: eine Draufsicht auf ein plattenförmiges Element des Werkzeugs der Fig. 1 in Richtung des Pfeils II der Fig. 1, jedoch ohne Verbindungselemente,
- Fig. 3: eine Seitenansicht eines erfindungsgemäßen Verbindungselements,
- Fig. 4: eine Ansicht in Richtung der Pfeile IV-IV der Fig. 3 und
- Fig. 5: eine Ansicht in Richtung des Pfeils V der Fig. 3.

Gleiche Elemente bzw. Elemente mit gleicher Funktion sind in den Figuren mit den gleichen Bezugsziffern versehen.

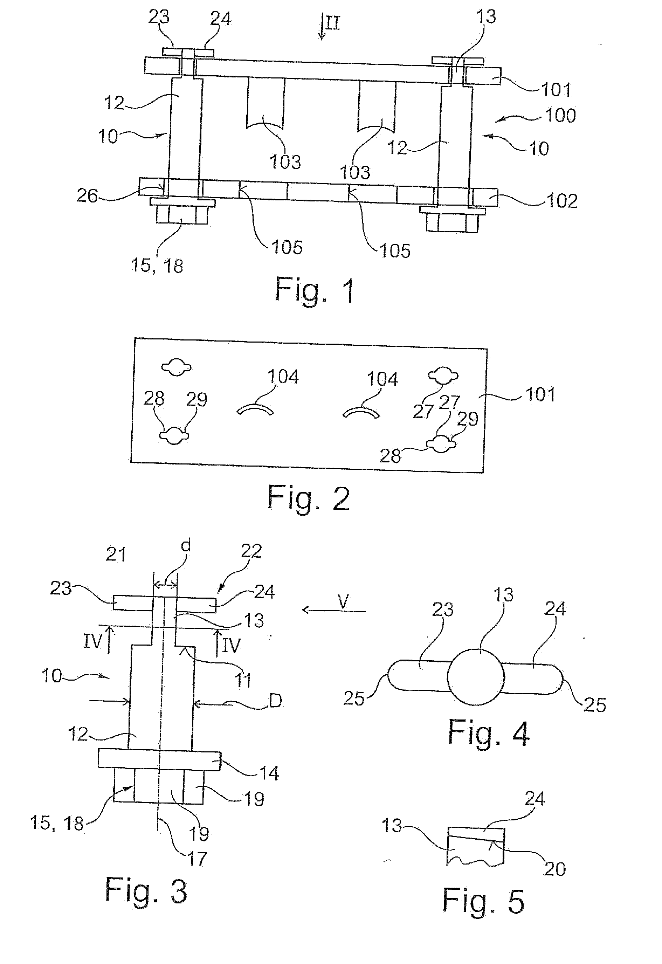

In der Fig. 1 ist in stark vereinfachter Art und Weise ein Werkzeug 100 in Form eines Stanz- oder Ausbrechwerkzeugs dargestellt, wie es in der Karton- oder Wellpappenindustrie verwendet wird. Das Werkzeug 100 umfasst ein erstes plattenförmiges Element in Form einer oberen Werkzeugplatte 101 und ein zweites plattenförmiges Element in Form einer unteren Werkzeugplatte 102, wobei die beiden Werkzeugplatten 101, 102 in der Praxis aus einer Vielzahl von miteinander verleimtem Sperrholzschichten bestehen. In der oberen Werkzeugplatte 101 sind beispielhaft mehrere, aus Stahlblechabschnitten bestehende Stanz- und/oder Ausbrechelemente 103 angeordnet. Hierzu sind, wie insbesondere anhand der Fig. 2 erkennbar ist, in der oberen Werkzeugplatte 101 durch einen Laserstrahl erzeugte Durchbrüche 104 als Werkzeugaufnahmen ausgebildet, in die die Stanz- bzw. Ausbrechelemente 103 einsetzbar sind. Fluchtend zu den Stanz- oder Ausbrechelementen 103 sind in der unteren Werkzeugplatte 102 Durchbrüche 105 ausgebildet, die zum Abtransport bzw. Ausstoßen von Stanzabfällen oder Ähnlichem dienen.

Ein derartiges, soweit beschriebenes Werkzeug 100 ist in der Praxis innerhalb eines hydraulischen, pressenartigen Werkzeugs eingesetzt, wobei die untere Werkzeugplatte 102 auf einem Maschinentisch bzw. Maschinenbett angeordnet wird, während die obere Werkzeugplatte 101 an einer heb- bzw. senkbaren Traverse o.ä. befestigt ist. Zum Bearbeiten eines Kartons bzw. einer Wellpappe wird diese taktweise in den Zwischenraum zwischen den beiden Werkzeugplatten 101, 102 hindurchgeschoben, wobei in einer Stillstandsphase durch Absenken der oberen Werkzeugplatte 101 an dem Karton bzw. an der Wellpappe die entsprechenden Ausstanzungen o.ä. vorgenommen werden.

Entweder zum Transport der beiden Werkzeugplatten 101, 102 von dem Hersteller des Werkzeugs 100 oder aber zur Zwischenlagerung der Werkzeugplatten 101, 102 in einem Betrieb ist es erforderlich, die beiden Werkzeugplatten 101, 102 in definierter Position zueinander zu transportieren bzw. zu lagern. Hierzu ist es erfindungsgemäß vorgesehen, mehrere, in der Praxis zwischen zwei und sechs erfindungsgemäße Verbindungselemente 10 zu verwenden, die jeweils identisch ausgebildet sind. Die stiftförmigen Verbindungselemente 10 sind dabei beispielsweise in Eck- oder Randbereichen, oder aber in einem Zwischenbereich der üblicherweise eine rechteckförmige Grundfläche aufweisenden Werkzeugplatten 101, 102 angeordnet.

Das in den Fig. 3 und 4 dargestellte, einstückig ausgebildete Verbindungselement 10 besteht aus einem faserverstärktem Kunststoff und ist als Spritzgussteil ausgebildet. Das Verbindungselement 10 weist zwei, unmittelbar über eine Stufe 11 miteinander verbundene Abschnitte 12, 13 auf. Die beiden Abschnitte 12, 13 haben dabei jeweils eine kreisförmige Querschnittsfläche, wobei der Durchmesser D des ersten Abschnitts 12 größer ist als der Durchmesser d des zweiten Abschnitts 13. Auf der dem zweiten Abschnitt 13 abgewandten Seite des ersten Abschnitts 12 schließt sich an den ersten Abschnitt 12 ein erster Axialanschlag 14 an. Der erste Axialanschlag 14 ist ring- bzw. kreisförmig ausgebildet und weist einen gegenüber dem Durchmesser D des ersten Abschnitts 12 nochmals vergrößerten Außendurchmesser auf. Auf der dem ersten Abschnitt 12 abgewandten Seite des ersten Axialanschlags 14 schließt sich an den ersten Axialanschlag 14 ein Betätigungselement 15 für das Verbindungselement 10 an, das dazu dient, das Verbindungselement 10 um dessen Längsachse 17 drehen zu können. Hierzu weist das Betätigungselement 15 eine Werkzeugaufnahme 18 für einen Gabelschlüssel (nicht dargestellt) auf, die mehrere, jeweils eben ausgebildete Werkzeugangriffsflächen 19 umfasst.

Auf der dem ersten Abschnitt 12 abgewandten Seite des zweiten Abschnitts 13 ist an dessen Endbereich 21 ein zweiter Axialanschlag 22 angeformt. Der zweite Axialanschlag 22 umfasst im dargestellten Ausführungsbeispiel zwei, um 180° zueinander versetzt angeordnete Haltearme 23, 24, die sich in radialer Richtung von der Längsachse 17 erstrecken und jeweils in Draufsicht eine rechteckförmige Form mit gerundet ausgebildeten Endabschnitten 25 aufweisen. Weiterhin ist es bevorzugt vorgesehen, dass die Dicke bzw. Höhe der Haltearme 23, 24 entsprechend der Darstellung der Fig. 5 unterschiedlich ist, derart, dass die der Stufe 11 zugewandte Unterseite 20 der Haltearme 23, 24 schräg verläuft. Dadurch ergibt sich zur Stufe 11 ein über die Breite der Haltearme 23, 24 gesehen unterschiedlicher Abstand. Dadurch wird dem Umstand Rechnung getragen, dass die obere Werkzeugplatte 101, die beispielsweise eine Nenndicke von 15,0mm aufweist, je nach Toleranz, zwischen beispielsweise 14,7mm und 15,2mm dick sein kein. Es wird somit bei einem entsprechenden Abstand zwischen der Unterseite 20 und der Stufe 11 (zwischen 14,7mm und 15,2mm) bei allen Toleranzlagen eine Anlage der Unterseite 20 an der oberen Werkzeugplatte 101 ermöglicht.

Die axiale Länge des zweiten Abschnitts 13 zwischen der Stufe 11 und der der Stufe 11 zugewandten Unterseite der beiden Haltearme 23, 24 entspricht der Dicke der oberen Werkzeugplatte 101. Demgegenüber ist die axiale Erstreckung des ersten Abschnitts 12 des Verbindungselements 10 in Richtung der Längsachse 17 größer als die Dicke der dem ersten Abschnitt 12 zugeordneten unteren Werkzeugplatte 102.

Entsprechend der Fig. 1 ist in der unteren Werkzeugplatte 102 ein erster Durchbruch 26 zur Durchführung des ersten Abschnitts 12 des Verbindungselements 10 ausgebildet. Hierbei ist der Durchmesser des ersten Durchbruchs 26, mit Ausnahme eines geringen Radialspiels, dem Durchmesser D des ersten Abschnitts 12 des Verbindungselements 10 angepasst. Weiterhin ist in der oberen Werkzeugplatte 101 ein zweiter Durchbruch 27 ausgebildet, der zur Aufnahme bzw. zum Durchführen des zweiten Abschnitts 13 des Verbindungselements 10 dient. Wie insbesondere anhand der Fig. 2 erkennbar ist, ist die Form des zweiten Durchbruchs 27 nicht nur dem Durchmesser d des zweiten Abschnitts 12 (mit geringem radialen Bewegungsspiel) angepasst, sondern der zweite Durchbruch 27 weist darüber hinaus zwei weitere, von dem zweiten Durchbruch 27 ausgehende Durchbrüche 28, 29 auf, deren Form bzw. Anordnung der Form bzw. Anordnung der beiden Haltearme 23, 24 angepasst ist.

Zum Verbinden der beiden Werkzeugplatten 101, 102 des Werkzeugs 100 mittels eines Verbindungselements 10 wird das Verbindungselement 10 mit seinem zweiten Abschnitt 13 und den Haltearmen 23, 24 von der der oberen Werkzeugplatte 101 abgewandten Seite durch den ersten Durchbruch 26 der unteren Werkzeugplatte 102 hindurchgeführt. Anschließend wird das Verbindungselement 10 bzw. dessen zweiter Abschnitt 13 mit seinen Haltearmen 23, 24 durch entsprechende Positionierung bzw. Winkelstellung durch den Durchbruch 27 sowie die weiteren Durchbrüche 28, 29 der oberen Werkzeugplatte 101 hindurchgeführt, bis die Stufe 11 des Verbindungselements 10 an der Unterseite der oberen Werkzeugplatte 101 axial anliegt. Anschließend wird das Verbindungselement 10 um die Längsachse 17 durch entsprechende Drehung des Verbindungselements 10 über die Werkzeugaufnahme 18 gedreht, sodass die beiden Haltearme 23, 24 den zweiten Durchbruch 27 der oberen Werkzeugplatte 101 unter Ausbildung einer Formschlussverbindung hintergreifen. Dadurch wird die obere Werkzeugplatte 101 in Bezug zum Verbindungselement 10 axial fixiert. Demgegenüber ist die untere Werkzeugplatte 102 in Richtung der Längsachse 17 des Verbindungselements 10 entlang des ersten Abschnitts 12 des Verbindungselements 10 axial beweglich.

Um die beiden Werkzeugplatte 101, 102 in einem definierten Axialabstand zueinander zu positionieren bzw. zu halten, insbesondere derart, dass die untere Werkzeugplatte 102 an dem ersten Axialanschlag 14 anliegt, kann es vorgesehen sein, zwischen den beiden Werkzeugplatten 101, 102 beispielsweise Schaumstoffelemente, Federelemente oder Ähnliches anzuordnen bzw. vorzusehen.

Das soweit beschriebene erfindungsgemäße Verbindungselement 10 kann in vielfältiger Art und Weise abgewandelt bzw. modifiziert werden, ohne vom Erfindungsgedanken abzuweichen. Auch kann das Werkzeug 100 gegenüber der dargestellten und beschriebenen Ausführung modifiziert werden. So ist es insbesondere denkbar, die Anordnung des Verbindungselements 10 zu den beiden Werkzeugplatten 101, 102 um 180° gedreht zu vertauschen, derart, dass der zweite Axialanschlag 22 in Wirkverbindung mit der unteren Werkzeugplatte 102 angeordnet ist.

### Bezugszeichenliste

- 10: Verbindungselement
- 11: Stufe
- 12: Abschnitt
- 13: Abschnitt
- 14: erster Axialanschlag
- 15: Betätigungselement
- 17: Längsachse
- 18: Werkzeugaufnahme
- 19: Werkzeugangriffsfläche
- 20: Unterseite
- 21: Endbereich
- 22: zweiter Axialanschlag
- 23: Haltearm
- 24: Haltearm
- 25: Endabschnitt
- 26: erster Durchbruch
- 27: zweiter Durchbruch
- 28: Durchbruch
- 29: Durchbruch

- 100: Werkzeug
- 101: obere Werkzeugplatte
- 102: untere Werkzeugplatte
- 103: Stanz- und/oder Ausbrechelement
- 104: Durchbruch
- 105: Durchbruch

- D: Durchmesser des ersten Abschnitts
- d: Durchmesser des zweiten Abschnitts

## Patentansprüche

1. Verbindungselement (10) für wenigstens zwei plattenförmige Elemente (101, 102) eines Werkzeugs (100), insbesondere eines Stanz- oder Ausbrechwerkzeugs, mit einem ersten Abschnitt (12), der dazu ausgebildet ist, mit einem ersten plattenförmigen Element (102) des Werkzeugs (100) verbunden zu werden und einem zweiten Abschnitt (13), der dazu ausgebildet ist, mit einem zweiten plattenförmigen Element (101) des Werkzeugs (100) verbunden zu werden, wobei der erste Abschnitt (12) zur linearen Führung des ersten plattenförmigen Elements (102) entlang einer Längsachse (17) des Verbindungselements (10) ausgebildet ist, und wobei die beiden Abschnitte (12, 13) jeweils einen Axialanschlag (14, 22) zur Begrenzung eines maximalen Bewegungshubs der wenigstens zwei plattenförmigen Elemente (101, 102) aufweisen,
**dadurch gekennzeichnet,**
**dass** das Verbindungselement (10) einstückig ausgebildet ist, und dass der Axialanschlag (22) des zweiten Abschnitts (13) dazu ausgebildet ist, einen Durchbruch (27) des zweiten plattenförmigen Elements (101) des Werkzeugs (100) unter Ausbildung einer Formschlussverbindung zu hintergreifen.

2. Verbindungselement nach Anspruch 1,
**dadurch gekennzeichnet,**
**dass** der Axialanschlag (22) des zweiten Abschnitts (13) wenigstens einen Halteabschnitt (23, 24), vorzugsweise in Form eines Haltearms aufweist, der sich senkrecht zur Längsachse (17) des Verbindungselements (10) erstreckt.

3. Verbindungselement nach Anspruch 2,
**dadurch gekennzeichnet,**
**dass** genau zwei, um 180° zueinander versetzt angeordnete Halteabschnitte (23, 24) vorgesehen sind, und dass die beiden Halteabschnitte (23, 24) auf der dem ersten Abschnitt (12) zugewandten Seite vorzugsweise eine schräg ausgebildete Unterseite (20) aufweisen.

4. Verbindungselement nach einem der Ansprüche 1 bis 3,
**dadurch gekennzeichnet,**
**dass** die beiden Abschnitte (12, 13) jeweils einen runden Querschnitt mit unterschiedlichem Durchmesser (D, d) aufweisen, dass der zweite Abschnitt (13) den geringeren Durchmesser (d) aufweist, und dass die beiden Axialanschläge (14, 22) jeweils an einander abgewandten Endbereichen der beiden Abschnitte (12, 13) angeordnet sind.

5. Verbindungselement nach Anspruch 4,
**dadurch gekennzeichnet,**
**dass** der Übergang zwischen den beiden Abschnitten (12, 13) in Form einer Stufe (11) ausgebildet ist, und dass die axiale Länge des zweiten Abschnitts (13) zwischen der Stufe (11) und dem dem zweiten Abschnitt (13) zugeordneten Axialanschlag (22) der Dicke des zweiten plattenförmigen Elements (101) angepasst ist.

6. Verbindungselement nach einem der Ansprüche 1 bis 5,
**dadurch gekennzeichnet,**
**dass** der dem ersten Abschnitt (12) zugeordnete Axialanschlag (14) scheiben- bzw. ringförmig ausgebildet ist.

7. Verbindungselement nach einem der Ansprüche 1 bis 6,
**dadurch gekennzeichnet,**
**dass** auf der dem ersten Abschnitt (12) abgewandten Seite des ersten Axialanschlags (14) ein Betätigungselement (15), vorzugsweise in Form einer Werkzeugaufnahme (18) für einen Gabelschlüssel ausgebildet ist, die zum Drehen des Verbindungselements (10) um die Längsachse (17) dient.

8. Verbindungselement nach einem der Ansprüche 1 bis 7,
**dadurch gekennzeichnet,**
**dass** das Verbindungselement (10) als Spritzgußteil ausgebildet ist und aus faserverstärktem Kunststoff besteht.

9. Verwendung eines Verbindungselements (10) nach einem der Ansprüche 1 bis 8 als Transport- und Positionierelement wenigstens zweier plattenförmiger Elemente (101, 102) eines Stanz- oder Ausbrechwerkzeugs.

10. Stanz- oder Ausbrechwerkzeug oder dergleichen, umfassend wenigstens zwei plattenförmige Elemente (101, 102), die unter Verwendung wenigstens eines, vorzugsweise mehrerer Verbindungselemente (10) nach einem der Ansprüche 1 bis 8 miteinander verbunden sind, wobei in einem plattenförmigen Element (102) ein erster Durchbruch (26) für den ersten Abschnitt (12) des Verbindungselements (10) ausgebildet ist,
**dadurch gekennzeichnet,**
**dass** in dem zweiten plattenförmigen Element (101) ein zweiter Durchbruch (27) für den zweiten Abschnitt (13) des Verbindungselements (10) ausgebildet ist, und dass der zweite Durchbruch (27) zusätzlich wenigstens eine Aussparung in Form eines Durchbruchs (28, 29) aufweist, der der Form des Axialanschlags (24) des zweiten Abschnitts (13) angepasst ist.
